# EUROPEAN PATENT SPECIFICATION

(11) **EP 1 319 296 B1**
(45) Date of publication and mention of the grant of the patent: **18.04.2007**
(21) Application number: 01966736.9
(22) Date of filing: 30.08.2001
(51) Int. Cl.: H04L 29/06, H04L 12/56

(54) **System and process for defending against denial of service attacks on networks nodes**
System und Verfahren zur Verteidigung gegen Denial-of-Service angriffe auf die Netzwerkknoten
Système e procédé de defense contre les attaques de refus de service sur des noeuds de réseau

(30) Priority: 01.09.2000 US 653045
(43) Date of publication of application: 18.06.2003
(73) Proprietor: Top Layer Networks, Inc., Westboro, MA 01581-1770 (US)
(72) Inventor: NARAYANASWAMY, Krishna, Westboro, MA 01581-1770 (US); SPINNEY, Barry A., Westboro, MA 01581-1770 (US); ROSS, Theodore L., Westboro, MA 01581-1770 (US); PAQUETTE, Michael D., Westboro, MA 01581-1770 (US); WRIGHT, Christopher L., Westboro, MA 01581-1770 (US)
(74) Representative: Casey, Lindsay Joseph
(86) International application number: PCT/US2001/041961
(87) International publication number: WO 2002/019661

(56) References cited:
- WO-A-99/48303
- US-A- 5 958 053
- SCHUBA C L ET AL: "Analysis of a denial of service attack on TCP" SECURITY AND PRIVACY, 1997. PROCEEDINGS., 1997 IEEE SYMPOSIUM ON OAKLAND, CA, USA 4-7 MAY 1997, LOS ALAMITOS, CA, USA,IEEE COMPUT. SOC, US, 4 May 1997 (1997-05-04), pages 208-223, XP010230160 ISBN: 0-8186-7828-3

## Description

### FIELD OF THE INVENTION

This invention relates generally to computer security and more particularly to preventing "denial of service" attacks through SYN flooding of a server connected to a computer network using the TCP/IP protocol.

### BACKGROUND OF THE INVENTION

Networks and the computers connected by networks have many vulnerabilities. One vulnerability is susceptibility to Denial of Service (DOS) attacks and Distributed Denial of Service (DDOS) attacks. These problems have recently brought down many prominent web sites and rendered them useless for many hours.

A common type of DOS attack is called SYN flooding. Typically, a TCP-based application connection is set up by a 3-way handshake that is completed between a client and server. The client asks for a connection to the server by sending a SYN (synchronization) message to the server. In response, the server allocates resources and responds to the client with a SYN-ACK (synchronization acknowledgment) message. The client, upon receiving the SYN-ACK, replies to the server with an ACK, and the connection then enters the ESTABLISHED state.

If the 3-way handshake does not complete normally, the server generally holds on to the state for as long as 2 minutes before releasing the connection and the allocated resources. The DOS and DDOS attacks involve rogue client machines initiating multiple connections that do not respond to the SYN-ACK sent by the server. The server soon runs out of resources and cannot set up new connections from legitimate clients. Under certain circumstances, the.servers must be rebooted before they can return to normal behavior. If the attack persists, the server could be taken out of service for a long time.

Another type of DOS attack involves repeated complete TCP connections. For example, repeated HTTP GET requests from an Internet client to a server. While the HTTP GET command is small, the amount of data requested from the server can be large. With each HTTP GET command potentially using up a significant percentage of the server resources, the server can be potentially overwhelmed. A large number of HTTP GET requests could overwhelm a server even without requesting large amounts of data. Further examples of potential attacks are FTP GET messages and SMTP (e-mail) SEND commands.

There are other solutions in the current art that attempt to solve the DOS and DDOS attack problems. The most popular solutions involve a third device (usually a switch or router) acting on behalf of the server, known as a "proxy," until the 3-way handshake completes successfully. The proxy then connects to the server. This is a resource-intensive process.

Current art proxy devices have difficulty handling even a reasonable network load. It remains desirable to protect network servers without sacrificing server availability.

WO 99 48303 A (Cisco Technology Inc. 1999-09-23) discloses a "Method for blocking denial of service and address spoofing attacks on a private network" in which a router, interposed between a private network and a public network, analyzes data packets directed from the public network to the private network and based upon pattern matching identifies the source as malicious or non-malicious. Two patterns are disclosed (1) the matching of the source IP address with an internal address, indicating address spoofing; and (2) an unacknowledged data packet or an acknowledged packet for an existing connection, indicating a SYN-flooding attack.

Schuba, C.L. et al., "Analysis of a denial of service attack on TCP," Security and Privacy, 1997 Proceedings, 1997 IEEE Symposium at Oakland, CA, USA, 4-7 May 1997, Los Alamitos, CA, USA, IEEE Computer Society, US, 4 May 1997, pages 208-223, ISBN: 0-8186-7828-3, discloses a state machine, interposed between a source host and a destination host, to address SYN-flooding with "new" starting state for a source address for a first TCP packet with a SYN bit set, and the address moved to a "good" state when a valid "ACK" or "RST" is received within an expiry time period and moved to a "bad" state otherwise, with a "RST" packet sent, closing the connection. "Perfect" and "evil" states are administratively set and an address moved from "good" to "new" after a staleness time period.

The present invention provides a process and apparatus for defending against malicious reservation of resources characterized according to claims 1 and 6 respectively.

The present invention provides a network switch that maintains a relatively lightly loaded state, and at the same time, protects the network servers from DOS and DDOS attacks. The switch maintains a very large table of IP Addresses (for example however larger tables are possible within the scope of the present invention) where it stores information such as the number of incomplete/completed connections from each address. Using this information, the switch classifies each address into a threat level: unknown, trusted, suspicious and malicious. Each threat level is treated differently allowing the switch to provide efficient access to the server while maintaining security. Connection to the server is denied to clients classified as malicious, while trusted clients are passed through to the server. Suspicious connections are proxied, while unknown connection treatment may be set by the user.

By continuously keeping track of how many connection attempts are made by each client and how many of those are completed successfully, the switch transitions a client's IP address into one of the above mentioned Threat Levels and treats the attempted connection to the server accordingly.

Embodiments of the invention will now be described by way of example, with reference to the accompanying drawings in which:
Figure 1 is a block diagram of a web site having a switch according to principles of the invention connected to the Internet;
Figure 2 is a schematic diagram of communications between a client and a server through the switch of Figure 1;
Figure 3 is a state diagram of the switch of Figure 1;
Figure 4 is a first flow chart of the operation of the switch of Figure 1 ;
Figure 5 is a second flow chart of the operation of the switch of Figure 1 when a request for connection from a trusted IP address is received;
Figure 6 is a third flow chart of the operation of the switch of Figure 1 when a request for connection from a suspicious IP address is received; and
Figure 7 is a fourth flow chart of the operation of the switch of Figure 1 when a request for connection from an unknown address is received.

### DETAILED DESCRIPTION OF PREFERRED EMBODIMENTS

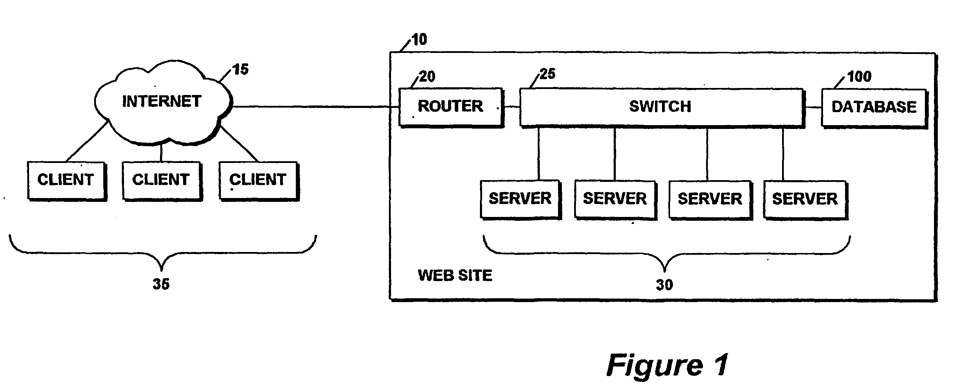

Figure 1 is a block diagram of the switch according to principles of the present invention. A web site 10 connected to the Internet 15 has a router 20 connected to a switch 25 operating according to the present invention. The switch 25 has a plurality of servers 30 and a database 100 connected to it. A plurality of clients 35 connected to the Internet 15 may access the servers 30 on the Web site 10 through the switch 25. The servers may be accessed over the Internet using the TCP/IP protocol.

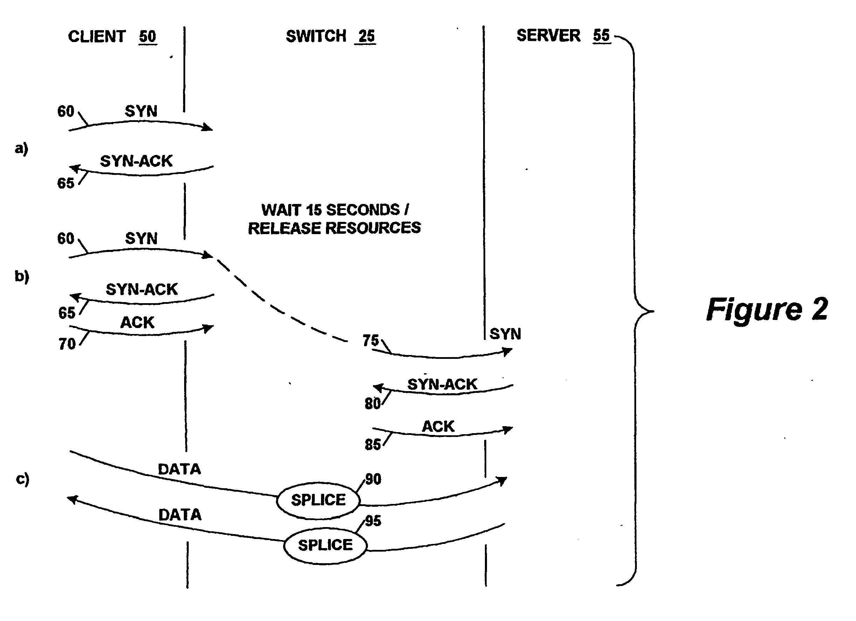

Figure 2 is a schematic diagram of establishing a proxied connection through the switch 25 of the present invention from a client 50 to a server 55.

Figure 2a shows an incomplete connection from the client 50 to the server 55. In attempting to establish a connection to the server 55, the client 50 sends a SYN message 60 which is received by the switch 25. The switch 25 allocates resources for a connection and sends a SYN-ACK message 65 to the client 50. The switch 25 then waits for a period of time for an ACK message from the client 50. The period of time may be, for example, 15 seconds, but it may be longer or shorter within the scope of the present invention. If, after the waiting period, the switch 25 does not receive an ACK message from the client 50, the switch releases the resources.

Figure 2b shows a completed proxied connection from the client 50 to the server 55 through the switch 25. The client 50 sends a SYN message 60. The switch 25 allocates resources and responds with a SYN-ACK message 65. The client 50 replies to the SYN-ACK message 65 with an ACK message 70 to complete a connection to the switch. When the ACK message 70 is received from the client, the switch sends a SYN message 75 to the server 55. The server 55 responds by allocating resources and sends a SYN-ACK message 80 to the switch 25. The switch responds with an ACK message 85 to complete the connection to the server 55 and the proxy connection to the client 50.

Figure 2c shows the switch 25 providing a data connection between the client 50 and the server 55. The switch 25 provides splices 90, 95 to match the client data sequence number with the server data sequence number.

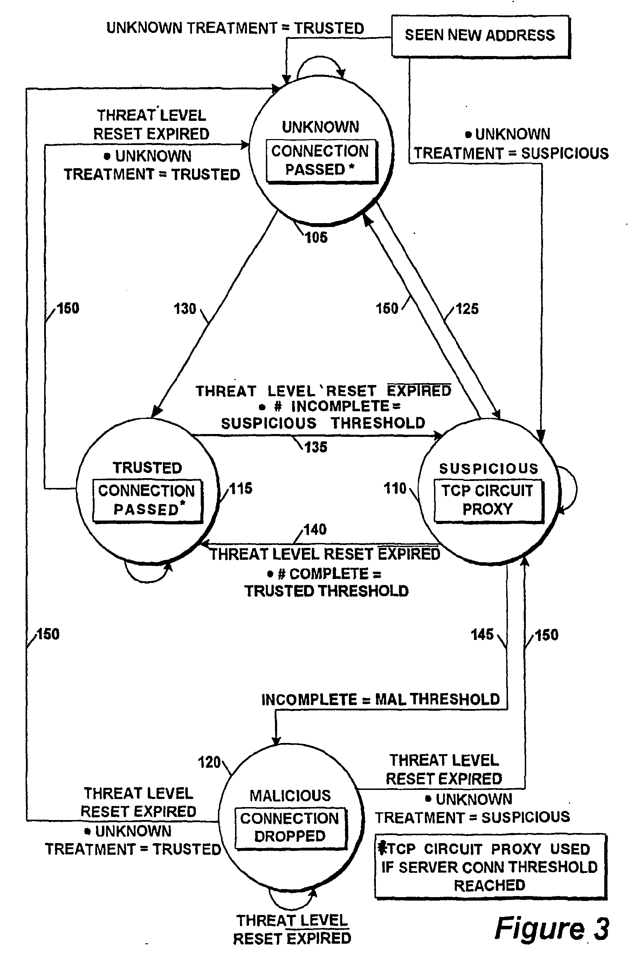

Figure 3 shows a state diagram of the switch of the present invention. The switch classifies a client attempting to connect to a server as one of four types: unknown 105, suspicious 110, trusted 115 or malicious 120. When the client attempts to connect to the server, a client identifier and the connection attempt are noted as described below. In the present invention, the client identifier is the IP address of the client. The identifier of the client and the associated client type are stored in a large database 100 (Figure 1) which the switch consults whenever a client requests a connection to a server connected to the switch. The database may be in the switch itself or it may be remote from the switch. The server may be directly or indirectly connected to the switch. Two counts are kept for each IP address in the database, a completed connections count and an incomplete connections count. The switch maintains a threshold value called the trusted threshold, which is associated with the completed connections count. The switch has two additional thresholds, the suspicious threshold and the malicious threshold, which are associated with the incomplete connections count.

A detailed description of the classification is as follows.
1) *Unknown* 105 - If a client is connecting for the first time, or after a sufficient length of time has passed since the client's previous connection, the client is classified as unknown. The switch may be set to treat an unknown client as either suspicious or trusted.
2) *Suspicious* 110 - If the number of incomplete connection setups from a particular client exceeds the suspicious threshold, the client is classified as suspicious.
3) *Trusted* 115 - If the number of successfully completed connections from a particular client is greater than a trusted threshold, the client is classified as trusted.
4) *Malicious* 120 - If the number of incomplete connection setups from a particular client exceeds the malicious threshold, then the client is classified as malicious.

Any client IP address that is classified as trusted is considered good and its connection request is sent to the server as normal. The user of the switch may also set the switch so that client IP addresses that are unknown may be treated as trusted.

Any connection request from a client IP address that is in the Suspicious state is always proxied by the switch. The server is contacted only upon successful completion of a connection between the client and the switch.

Any connection request from a client IP address that is in the malicious state is discarded.

The state transitions are as follows:
**Unknown** ---> **Suspicious** 125 A client is reclassified as suspicious from the unknown state when the number of incomplete connection requests is greater than or equal to the suspicious threshold of the server connect threshold.
**Unknown** ---> **Trusted** 130 A client is reclassified as trusted from the unknown state when the number of completed connection requests is greater than or equal to the trusted threshold.
**Trusted** ---> **Suspicious** 135 A client is reclassified as suspicious from a trusted state when the number of incomplete connection requests is greater than or equal to the suspicious threshold.
**Suspicious** ---> **Trusted** 140 A client is reclassified as suspicious from the trusted state when the number of completed connection requests is greater than or equal to the trusted threshold.
**Suspicious** ---> **Malicious** 145 A client is reclassified as malicious from the suspicious state when the number of incomplete connection requests is greater than or equal to the malicious threshold.

The initial state assigned to an address is based on the unknown treatment parameter set by the user. If it is set to suspicious, the initial state of an unknown client is suspicious and the first connection request is proxied. Otherwise the initial state is left classified as unknown which is treated in a manner similar to the trusted state.

In any one of these states, if there are no new connection requests for a period of time set in a ThreatLevelReset Time value, the address is returned to an initial state of unknown 150, except in the case where the transition is from the malicious state and the initial value for unknown clients is suspicious.

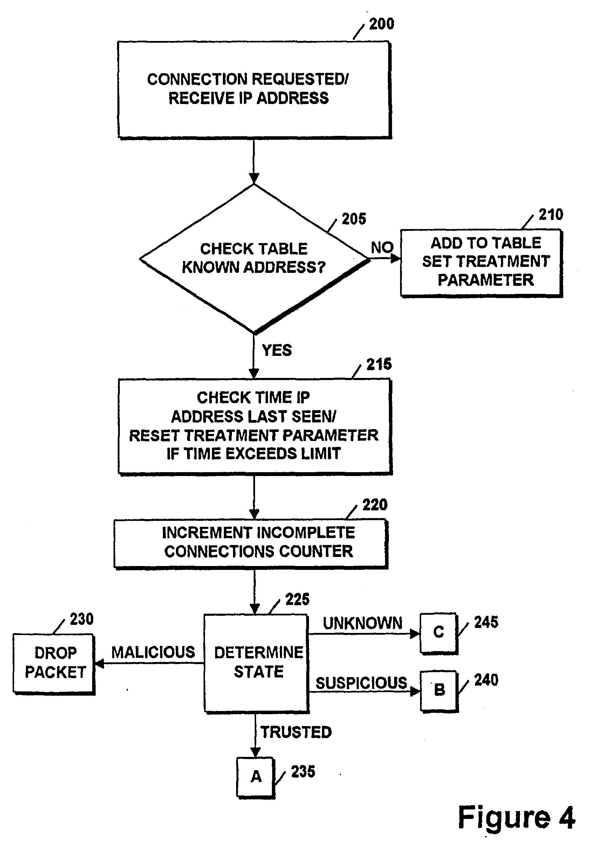

Figure 4 is a first flow chart of the operation of the switch of the present invention. When a client requests a connection to a server connected to the switch, the switch receives a SYN message from the client which includes the client's IP address, block 200. The switch checks the table of IP addresses and associated types, block 205. If the client IP address is not found in the table, then the client is unknown. The IP address is added to the table and the switch treatment parameter is set, block 210. If the client IP address is found in the table, the switch then checks the table for the last time the client requested a connection, block 215. If the period of time since the last connection request exceeds the time limit, then the treatment parameter for the client is reset to unknown, block 215.

Then the switch increments an incomplete connections counter associated with the IP address, block 220. The switch then reads the treatment parameter for the client from the table, block 225, and then moves to that state. If the client is of type malicious, the packet from the client is dropped and no connection is established, block 230.

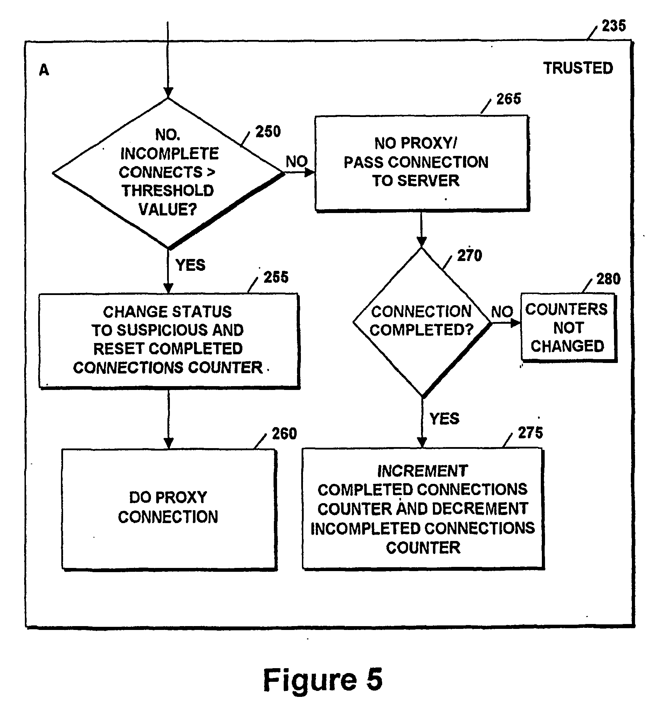

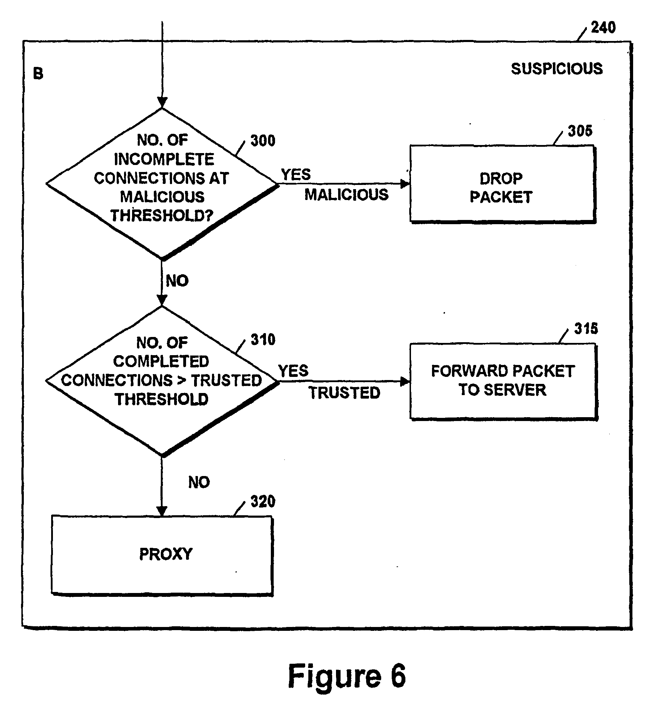

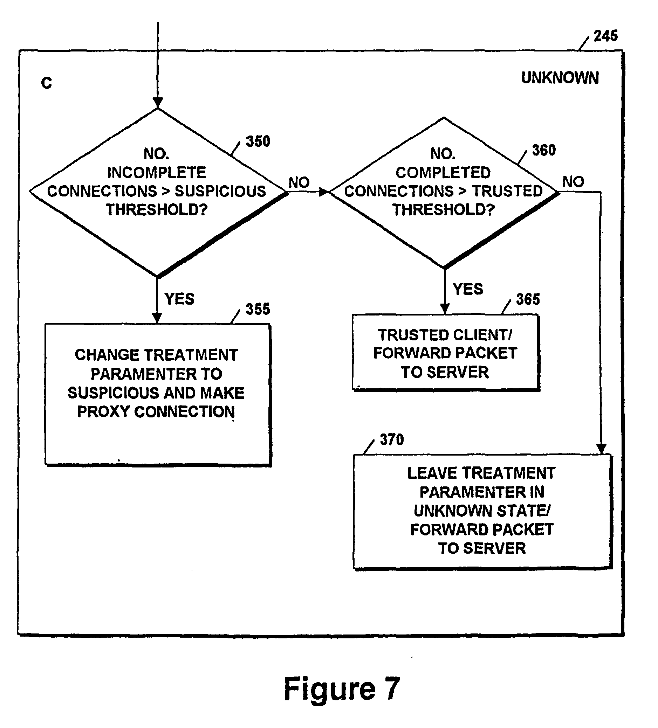

If the client is trusted, the client is handled according to Method A 235 shown Figure 5. If the client is suspicious, the client is handled according to Method B 240 as shown in Figure 6. If the client is unknown, the client is handled according to Method C 245 in Figure 7.

Referring now to Figure 5, when the client is a trusted client, the switch determines if the number of incomplete connections is greater than the suspicious threshold 250. If the suspicious threshold is exceeded, the client's status is changed to suspicious 255. The switch resets the completed connections counter for the client. The switch then establishes a proxy connection between the server and the client 260.

If the suspicious threshold has not been exceeded, the client remains classified as a trusted client. A trusted client requires no proxy and the connection is passed to the server, block 265. The switch then determines whether the connection between the client and the server was completed, block 270. If the connection is completed, the completed connections counter is incremented and the incompleted connections counter is decremented, block 275. If the connection is not completed, the counters are not changed block 280.

Referring now to Figure 6, when a client is a suspicious client, the switch first determines whether the number of incomplete connections is equal to the malicious threshold, block 300. If it is, the packet is dropped and the connection is not completed, block 305. If the incomplete connections count is not equal to the malicious threshold, the switch determines whether the number of completed connections is greater than the trusted threshold, block 310. If the trusted threshold has been exceeded, the switch passes the connection through to the server, block 315. If the trusted threshold has not been exceeded, the switch acts as a proxy device between the client and the server, block 320.

Referring now to Figure 7, when a client is an unknown client, the switch first determines whether the incomplete connections counter exceeds the suspicious threshold, block 350. If the suspicious threshold is exceeded, the treatment parameter of the client is changed to suspicious and the switch forms a proxy connection between the client and the server, block 355. If the suspicious threshold has not been exceeded, the switch then determines whether the completed connections counter is greater than the trusted threshold, block 360. If the trusted threshold is exceeded, the client is classified as a trusted client and the connection is forwarded to the server, block 365. If the trusted threshold has not been exceeded, then the client remains in the unknown state and the connection is forwarded to the server, block 370.

The switch also maintains a count of valid connections per source IP address for types of requests which may be used to attack the server. The count is kept per unit time. If a client address exceeds a threshold number of valid connections of a specified type, connection attempts beyond the threshold number are discarded. Examples of requests are HTTP GET requests, and FTP GET requests.

There is an alternate form of SYN flood attack where there are a large number of clients, i.e. a large number of addresses, each request a connection to a server. In this type of attack, the individual addresses themselves may not exceed the suspicious or malicious thresholds, and so may not be proxied or barred from connection. The server, however, could receive a higher number of connections than it can handle. In order to protect the server form this type of attack, the switch maintains a counter of incomplete TCP connections to each server. If this number exceeds a threshold called the ServerCon threshold, the requested connection is always proxied except where the address is already classified as malicious, in which case the connection request is dropped.

Every time a new connection is attempted through the switch, the switch sends a session report to a data collector. The data collector may be close to the switch or remotely located. The report indicates the threat level that was associated with the client IP address for the attempted connection. The data may be stored for purposes such as generating system messages to users monitoring the system. The data may also be extracted for analysis or into a graphical monitoring system.

In a first alternative embodiment of the invention, instantaneous thresholds may be set. The instantaneous thresholds are set to large enough values so that ACKs that are lost to due lost packets do not trigger a change in switch state possibly resulting in denial of a client. The instantaneous threshold values are also set small enough so that genuine attacks are not allowed to create a DOS condition.

In a second alternative embodiment of the invention, thresholds are randomly varied so that network scanning tools have greater difficulty in determining if a particular switch or server is in a network.

In a third alternative embodiment of the invention, a percentage of connects from "known threat" addresses may be proxied in order to confuse network scanning tools. The percentage may be based on attack load or normal load. If the switch is under heavy attack, for example, the "known threat" addresses are all, or almost all, discarded. If the switch is under light attack, then some connections from the "known threat" addresses are proxied. This provides a confused view of the network to network scanning tools and further tends to provide a different set of "available" ports at different times, i.e. at repeated attacks.

In a fourth alternative embodiment of the invention, the malicious threshold is a ratio of the number of failed connections to the number of requests greater than a selected initialization threshold. This method, however, may enable a sophisticated threat involving mixing good requests with malicious requests resulting in a DOS failure of the server because the threat level of the source IP address was not raised to the malicious level.

It is to be understood that the above-described embodiments are simply illustrative of the principles of the invention. Various and other modifications and changes may be made by those skilled in the art which will embody the principles of the invention and fall within the scope thereof.

## Claims

1. A process for defending against malicious reservation of resources causing denial of service in a communication network (10, 15) in which connections are established in part by a reservation of node (30) resources during connection set-up, said process comprising:
a) receiving (200) from a particular source (35) a request for reservation of said node resources;
b) comparing (205) an identifier of said source included with said request with a database (100) of source identifiers and associated states for treatment; and
c) treating said request according to the state associated with said source (225); **characterized by**:
d) incrementing a counter of incomplete connections associated with said source (220) if the request is not granted, said counter being reset after a predetermined period of time during which there is no request with said source identifier (215);
e) if the value of said counter (220) exceeds a threshold of presumed maliciousness (225, 230), associating a malicious state (120) with said source and rejecting further requests with said source identifier for a predetermined time-out-period.

2. The process as claimed in Claim 1 **characterized by** the additional step of:
d1) if the value of said counter (220) exceeds a threshold of suspicion, associating a suspicious state (110) with said source and sending through a proxy further requests from said source for a predetermined watch period.

3. The process as claimed in Claim 1 **characterized in that** said threshold is a ratio of said counted number of incomplete connections to a counted number of requests greater than a predetermined initialization threshold.

4. The process as claimed in Claim 1 **characterized by** the additional steps of:
f) if a connection is made to node (30), incrementing a second counter of completed connections associated with said source and decrementing said counter of incomplete connections associated with said source (275); and
g) if said second counter of completed connections exceeds a threshold of presumed trustworthiness (310), then associating a trusted state (115) with said source and passing connection to said requested node (30).

5. The process as claimed in Claim 1 **characterized by** maintaining counters for incomplete connections to each node (30), and when the value of a counter for a node exceeds a threshold of suspicion, proxying requested connections to the associated node if the requests are not dropped as being made from a malicious source.

6. An apparatus for mitigating attacks on one or more servers connected to a communication network (10, 15), comprising:
a database (100) for storing a plurality of client identifiers and associated client data; and
a switch (25) arranged to receive as input over the network a request, with an identifier of a client, for connection to the server, and to match said received identifier with a client identifier stored in said database and to operate on said requested connection according to client data associated with a matched identifier;
**characterized in that** said apparatus is arranged to maintain a counter for incomplete connections for each client identifier, said counter being incremented on each request (220) and decremented upon completion of the requested connection (275), and said counter being reset after a predetermined period of time during which there is no request with said client identifier (215), such that if the value of said counter (220) exceeds a threshold of presumed maliciousness (225, 230), then said associated client data is updated to indicate a malicious state (120) in which said switch rejects requests with said client identifier for a predetermined time-out-period.

7. The apparatus as claimed in claim 6 **characterized in that** if said counter (220) exceeds a threshold of suspicion, but not said threshold of presumed maliciousness (225, 230), then said associated client data is updated to indicate a suspicious state (110) in which said switch sends through a proxy further requests with said client identifier for a predetermined watch period.

8. The apparatus as claimed in claim 6 **characterized in that** said threshold of presumed maliciousness is a ratio of said counted number of incomplete connections to a counted number of requests greater than a predetermined initialization threshold.

9. The apparatus as claimed in claim 6 **characterized in that** said apparatus is arranged to maintain a second counter of completed connections for each client identifier incremented upon the completion of a requested connection (275), and if the value of said second counter exceeds a threshold of presumed trustworthiness (310), then said associated client data is updated to a trusted state (115) in which said switch passes requests with said client identifier to said requested server (30).

10. The apparatus as claimed in claim 6 **characterized in that** counters are maintained for incomplete connections to each server (30), and when the value of a counter for a server exceeds a threshold of suspicion requests for connections to the associated server are proxied if they are not dropped as made from a malicious client.

## Patentansprüche

1. Verfahren zur Verteidigung gegen eine bösartige Reservierung von Ressourcen, die eine Verweigerung des Dienstes in einem Kommunikationsnetz (10, 15) verursacht, in dem Verbindungen teilweise durch eine Reservierung von Knoten- (30) Ressourcen während der Einrichtung der Verbindung hergestellt werden, wobei das Verfahren Folgendes umfasst:
a) Empfangen (200) einer Anfrage zur Reservierung der Knotenressourcen von einer bestimmten Quelle (35);
b) Vergleichen (205) eines Etiketts der Quelle, das in der Anfrage enthalten ist, mit einer Datenbank (100) von Quellenetiketten und zugehörigen Zuständen für die Behandlung; und
c) Behandeln der Anfrage gemäß dem Zustand, der zu der Quelle (225) gehört; **gekennzeichnet durch**:
d) Inkrementieren eines Zählers für unvollständige Verbindungen, der zu der Quelle (220) gehört, wenn die Anfrage nicht gewährt wird, wobei der Zähler nach einer vorherbestimmten Zeitspanne, während derer keine Anfrage mit dem Quellenetikett (215) stattfindet, rückgesetzt wird;
e) Zuordnen eines bösartigen Zustands (120) zu der Quelle und Zurückweisen weiterer Anfragen mit dem Quellenetikett für eine vorherbestimmte Zeitablaufperiode, wenn der Wert des Zählers (220) einen Schwellenwert für angenommene Bösartigkeit (225, 230) überschreitet.

2. Verfahren nach Anspruch 1, **gekennzeichnet durch** folgenden zusätzlichen Schritt:
d1) Zuordnen eines verdächtigen Zustands (110) zu der Quelle und Senden weiterer Anfragen von der Quelle für einen vorherbestimmten Überwachungszeitraum **durch** einen Proxy, wenn der Wert des Zählers (220) einen Verdachtsschwellenwert überschreitet.

3. Verfahren nach Anspruch 1, **dadurch gekennzeichnet, dass** der Schwellenwert ein Verhältnis der gezählten Anzahl unvollständiger Verbindungen zu einer gezählten Anzahl von Anfragen ist, das größer als ein vorherbestimmter Initialisierungsschwellenwert ist.

4. Verfahren nach Anspruch 1, das durch die folgenden zusätzlichen Schritte **gekennzeichnet** ist:
f) Inkrementieren eines zweiten Zählers für vollständige Verbindungen, der zu der Quelle gehört, und Dekrementieren des Zählers für unvollständige Verbindungen, der zu der Quelle (275) gehört, wenn eine Verbindung mit dem Knoten (30) hergestellt wird; und
g) Zuordnen eines Vertrauenszustands (115) zu der Quelle und Weiterleiten der Verbindung zu dem angeforderten Knoten (30), wenn der zweite Zähler für vollständige Verbindungen einen Schwellenwert für angenommene Vertrauenswürdigkeit (310) überschreitet.

5. Verfahren nach Anspruch 1, charakterisiert durch die Aufrechterhaltung von Zählern für unvollständige Verbindungen mit jedem Knoten (30), und Bearbeiten von einem Proxy von angefragten Verbindungen zu dem zugehörigen Knoten, wenn der Wert eines Zählers für einen Knoten einen Verdachtsschwellenwert überschreitet, falls die Anfragen nicht als von einer bösartigen Quelle stammend ignoriert werden.

6. Vorrichtung zur Abschwächung von Angriffen auf einen oder mehrere Server, die mit einem Kommunikationsnetz (10, 15) verbunden sind, die Folgendes umfasst:
eine Datenbank (100) zum Speichern einer Vielzahl von Client-Etiketten und zugehörigen Client-Daten; und
eine Vermittlungsstelle (25), die für Folgendes ausgelegt ist: Empfang einer Anfrage mit einem Etikett eines Client als Eingabe über das Netz zur Verbindung mit dem Server, Vergleich des empfangenen Etiketts mit einem Client-Etikett, das in der Datenbank gespeichert ist, und Betrieb auf der angefragten Verbindung gemäß Client-Daten, die zu einem übereinstimmenden Etikett gehören;
**dadurch gekennzeichnet, dass** die Vorrichtung dafür ausgelegt ist, einen Zähler für unvollständige Verbindungen für jedes Client-Etikett aufrecht zu erhalten, wobei der Zähler bei jeder Anfrage (220) inkrementiert wird und bei Vollendung der angefragten Verbindung (275) dekrementiert wird und der Zähler nach einer vorherbestimmten Zeitspanne, während derer keine Anfrage mit dem Client-Etikett (215) stattfindet, rückgesetzt wird, so dass, wenn der Wert des Zählers (220) einen Schwellenwert für angenommene Bösartigkeit (225, 230) überschreitet, die zugehörigen Client-Daten aktualisiert werden, um einen bösartigen Zustand (120) anzuzeigen, bei dem die Vermittlungsstelle Anfragen mit dem Client-Etikett für eine vorherbestimmte Zeitablaufperiode zurückweist.

7. Vorrichtung nach Anspruch 6, **dadurch gekennzeichnet, dass** die zugehörigen Client-Daten aktualisiert werden, um einen Verdachtszustand (110) anzuzeigen, bei dem die Vermittlungsstelle weitere Anfragen mit dem Client-Etikett für einen vorherbestimmten Überwachungszeitraum durch einen Proxy sendet, wenn der Zähler (220) einen Verdachtsschwellenwert, jedoch nicht den Schwellenwert für angenommene Bösartigkeit (225, 230), überschreitet.

8. Vorrichtung nach Anspruch 6, **dadurch gekennzeichnet, dass** der Schwellenwert für angenommene Bösartigkeit ein Verhältnis der gezählten Anzahl unvollständiger Verbindungen zu einer gezählten Anzahl von Anfragen ist, das größer als ein vorherbestimmter Initialisierungsschwellenwert ist.

9. Vorrichtung nach Anspruch 6, **dadurch gekennzeichnet, dass** die Vorrichtung dafür ausgelegt ist, einen zweiten Zähler für vollständige Verbindungen für jedes Client-Etikett aufrecht zu erhalten, der bei der Vollendung einer angefragten Verbindung (275) inkrementiert wird, und wenn der Wert des zweiten Zählers einen Schwellenwert für angenommene Vertrauenswürdigkeit (310) überschreitet, dann werden die zugehörigen Client-Daten zu einem Vertrauenszustand (115) aktualisiert, bei dem die Vermittlungsstelle Anfragen mit dem Client-Etikett zu dem angefragten Server (30) weiterleitet.

10. Vorrichtung nach Anspruch 6, **dadurch gekennzeichnet, dass** Zähler für unvollständige Verbindungen mit jedem Server (30) aufrecht erhalten werden, und dass, wenn der Wert eines Zählers für einen Server einen Verdachtsschwellenwert überschreitet, Anfragen für Verbindungen zu dem zugehörigen Server von einem Proxy bearbeitet werden, wenn sie nicht als von einem bösartigen Client stammend ignoriert werden.

## Revendications

1. Un processus destiné à se défendre contre une réservation malveillante de ressources entraînant un refus de service dans un réseau de communication (10, 15) dans lequel des connexions sont établies en partie par une réservation de ressources de noeud (30) au cours de l'établissement de la connexion, ledit processus comprenant :
a) la réception (200) en provenance d'une source particulière (35) d'une demande de réservation desdites ressources de noeud,
b) la comparaison (205) d'un identifiant de ladite source inclus dans ladite demande avec une base de données (100) d'identifiants de source et d'états associés pour traitement, et
c) le traitement de ladite demande selon l'état associé à ladite source (225), **caractérisé par** :
d) l'incrémentation d'un compteur de connexions non établies associées à ladite source (220) si la demande n'est pas accordée, ledit compteur étant réinitialisé après un délai prédéterminé au cours duquel aucune demande n'est effectuée avec ledit identifiant de source (215),
e) si la valeur dudit compteur (220) dépasse un seuil de malveillance présumée (225, 230), l'association d'un état malveillant (120) à ladite source et le rejet de nouvelles demandes effectuées avec ledit identifiant de source pendant un délai de temporisation prédéterminé.

2. Le processus selon la Revendication 1 **caractérisé par** l'opération additionnelle suivante :
d1) si la valeur dudit compteur (220) dépasse un seuil de suspicion, l'association d'un état suspect (110) à ladite source et l'envoi par l'intermédiaire d'un mandataire des nouvelles demandes provenant de ladite source pendant une période d'observation prédéterminée.

3. Le processus selon la Revendication 1 **caractérisé par le fait que** ledit seuil est un rapport dudit nombre décompté de connexions non établies sur un nombre décompté de demandes supérieur à un seuil d'initialisation prédéterminé.

4. Le processus selon la Revendication 1 **caractérisé par** les opérations additionnelles suivantes :
f) si une connexion est établie avec le noeud (30), l'incrémentation d'un deuxième compteur de connexions établies associées à ladite source et la décrémentation dudit compteur de connexions non établies associées à ladite source (275), et
g) si ledit deuxième compteur de connexions établies dépasse un seuil de confiance présumée (310), alors l'association d'un état confiance (115) à ladite source et la transmission de la connexion audit noeud demandé (30).

5. Le processus selon la Revendication 1 **caractérisé par** l'entretien de compteurs de connexions non établies avec chaque noeud (30), et, lorsque la valeur d'un compteur pour un noeud dépasse un seuil de suspicion, le mandatement des connexions demandées vers le noeud associé si les demandes ne sont pas rejetées comme provenant d'une source malveillante.

6. Un appareil destiné à atténuer les attaques contre un ou plusieurs serveurs connectés à un réseau de communication (10, 15), comprenant :
une base de données (100) destinée à stocker une pluralité d'identifiants clients et de données clients associées, et
un commutateur (25) agencé de façon à recevoir en entrée par le réseau une demande, avec un identifiant d'un client, pour une connexion au serveur et à apparier ledit identifiant reçu avec un identifiant client stocké dans ladite base de données et à agir sur ladite connexion demandée selon des données clients associées à un identifiant apparié,
**caractérisé par le fait que** ledit appareil est agencé de façon à entretenir un compteur de connexions non établies pour chaque identifiant client, ledit compteur étant incrémenté à chaque demande (220) et décrémenté lors de l'établissement de la connexion demandée (275), et ledit compteur étant réinitialisé après un délai prédéterminé au cours duquel aucune demande n'a été effectuée avec ledit identifiant client (215), de sorte que, si la valeur dudit compteur (220) dépasse un seuil de malveillance présumée (225, 230), alors lesdites données clients associées sont actualisées de façon à indiquer un état malveillant (120) dans lequel ledit commutateur rejette les demandes effectuées avec ledit identifiant client pendant un délai de temporisation prédéterminé.

7. L'appareil selon la Revendication 6 **caractérisé par le fait que** si ledit compteur (220) dépasse un seuil de suspicion mais pas ledit seuil de malveillance présumée (225, 230), alors lesdites données clients associées sont actualisées de façon à indiquer un état suspect (110) dans lequel ledit commutateur envoie par l'intermédiaire d'un mandataire les nouvelles demandes effectuées avec ledit identifiant client pendant une période d'observation prédéterminée.

8. L'appareil selon la Revendication 6 **caractérisé par le fait que** ledit seuil de malveillance présumée est un rapport dudit nombre décompté de connexions non établies sur un nombre décompté de demandes supérieur à un seuil d'initialisation prédéterminé.

9. L'appareil selon la Revendication 6 **caractérisé par le fait que** ledit appareil est agencé de façon à entretenir un deuxième compteur de connexions établies pour chaque identifiant client incrémenté lors de l'établissement d'une connexion demandée (275), et, si la valeur dudit deuxième compteur dépasse un seuil de confiance présumée (310), alors lesdites données clients associées sont actualisées vers un état confiance (115) dans lequel ledit commutateur transmet les demandes effectuées avec ledit identifiant client au serveur demandé (30).

10. L'appareil selon la Revendication 6 **caractérisé par le fait que** des compteurs sont entretenus pour des connexions non établies avec chaque serveur (30), et, lorsque la valeur d'un compteur pour un serveur dépasse un seuil de suspicion, les demandes de connexion avec le serveur associé sont transmises à un mandataire si elles ne sont pas rejetées comme provenant d'un client malveillant.
